# EUROPÄISCHE PATENTANMELDUNG

(11) **EP 2 367 095 A2**
(43) Veröffentlichungstag der Anmeldung: **21.09.2011**
(21) Anmeldenummer: 11157847.2
(22) Anmeldetag: 11.03.2011
(51) Int. Cl.: G06F 3/044, G06F 3/048

(54) **Portables elektronisches Navigationsgerät**

(30) Priorität: 19.03.2010 DE 102010012213
(71) Anmelder: Navigon AG, 20251 Hamburg (DE)
(72) Erfinder: Engelhardt, Thomas, 97078 Würzburg (DE)
(74) Vertreter: von den Steinen, Axel

(57) **Zusammenfassung**

Die Erfindung betrifft ein portables elektronisches Navigationsgerät (01, 09, 13), mit einem Gehäuse (06, 17) zur Anordnung unterhalb der Windschutzscheibe (02) eines Fahrzeugs, mit einer Steuerungseinrichtung zur Durchführung eines Navigationsprozesses, mit einer Anzeigeeinrichtung, mittels derer Informationen auf einer Bildfläche (07, 10, 15) darstellbar sind, und mit einer Näherungssensorik (08, 11, 14, 16), wobei zur berührungslosen Eingabe von Bedienbefehlen mittels der Näherungssensorik (08, 11, 14, 16) eine Annäherung eines Gegenstands und/oder eines Körperteils (04) an das Navigationsgerät (01, 09, 13) detektiert werden kann, wobei die Näherungssensorik (08, 11, 14, 16) eine richtungsabhängige Detektionsfunktion aufweist, wobei die richtungsabhängige Detektionsfunktion der Näherungssensorik (08, 11, 14, 16) die Annäherung eines Gegenstands und/oder eines Körperteils (04) aus dem Bereich vor der Bildfläche (07, 10, 15) von der Annäherung eines Scheibenwischerarms (05) aus dem Bereich über der Windschutzscheibe (02) unterscheiden kann.

## Beschreibung

Die Erfindung betrifft ein portables Navigationsgerät gemäß dem Oberbegriff des Anspruchs 1.

Gattungsgemäße Navigationsgeräte werden in Fahrzeugen benutzt, um den Fahrer von einem Startpunkt zu einem Zielpunkt zu führen. Die Erfindung betrifft dabei Navigationsgeräte, die nicht fest im Fahrzeug eingebaut sind, sondern nur im Bedarfsfall im Fahrzeug angeordnet werden. Dabei kann es sich insbesondere auch um portable Geräte handeln, beispielsweise Smartphones oder Tablet-PCs, auf denen eine entsprechend geeignete Navigationssoftware installiert ist.

Üblicherweise werden die gattungsgemäßen Navigationsgeräte zur Benutzung im Fahrzeug mittels eines speziell dafür vorgesehenen Halters im Bereich zwischen der Oberseite der Armaturentafel und unterhalb der Windschutzscheibe befestigt, um dem Fahrer einerseits eine bequeme Bedienung zu ermöglichen und andererseits eine störungsfreie Sicht des Fahrers auf die Anzeigeeinrichtung zu realisieren.

Weiter sind die gattungsgemäßen Navigationsgeräte dadurch charakterisiert, dass sie eine Näherungssensorik aufweisen. Mittels dieser Näherungssensorik können berührungslose Gesten des Bedieners im Bereich vor oder neben dem Navigationsgerät detektiert werden. In der Steuerung des Navigationsgeräts können die Sensorsignale des Näherungssensors dann ausgewertet und als Eingabe von Bedienbefehlen interpretiert werden. Ein Navigationsgerät mit Näherungssensorik zur berührungslosen Eingabe von Bedienbefehlen ist beispielsweise aus der DE 10 2007 039 669 A1 bekannt.

Das der Erfindung gemeinsam zugrunde liegende Problem besteht darin, dass bei Anordnung der gattungsgemäßen Navigationsgeräte mit Näherungssensorik im Bereich unterhalb der Windschutzscheibe eines Fahrzeugs es zu Störungen der Näherungssensorik beim Betrieb der Scheibenwischer kommen kann. Denn auch die Wischerarme nähern sich beim Betrieb des Fahrzeugscheibenwischers an die unterhalb der Windschutzscheibe im Navigationsgerät befindliche Näherungssensorik an und entfernen sich wieder von dieser, so dass diese Bewegung des Wischerarms von der Näherungssensorik detektiert und fälschlicherweise als Bedienbefehl interpretiert wird. Durch diese unerwünschte Detektion der Scheibenwischerbewegung durch die Näherungssensorik des Navigationsgerätes können Verarbeitungsprozesse des Navigationsgerätes unerwünscht ausgelöst bzw. unterbrochen werden, so dass die Verwendung solcher Näherungssensoriken in Fahrzeugen bisher nicht praktikabel erschien.

Aufgabe der vorliegenden Erfindung ist es deshalb, ein Navigationsgerät vorzuschlagen, mit dem die unerwünschte Detektion von Scheibenwischerbewegungen durch die Näherungssensorik vermieden werden kann. Weiter soll ein Verfahren vorgeschlagen werden, mit dem das Problem der unerwünschten Detektion von Scheibenwischerbewegungen ebenfalls vermieden werden kann.

Diese Aufgaben werden durch ein Navigationsgerät bzw. ein Verfahren zum Betrieb eines Navigationsgerätes nach der Lehre der beiden unabhängigen Hauptansprüche gelöst.

Vorteilhafte Ausführungsformen der Erfindung sind Gegenstand der Unteransprüche.

Das der Erfindung zugrundeliegende Problem der Störung der Näherungssensorik durch die Bewegung der Scheibenwischerarme wird durch das erfindungsgemäße Navigationsgerät dadurch gelöst, dass die Näherungssensorik eine richtungsabhängige Detektionsfunktion aufweist. Diese richtungsabhängige Detektionsfunktion ist dabei dadurch charakterisiert, dass durch die Detektionsfunktion der Näherungssensorik die Annäherung eines Gegenstands und/oder eines Körperteils aus dem Bereich vor der Bildfläche von der Annäherung eines Scheibenwischerarms aus dem Bereich über der Windschutzscheibe unterschieden werden kann. Dies bedeutet mit anderen Worten, dass die Näherungssensorik des erfindungsgemäßen Navigationsgerätes so aufgebaut ist, dass Bewegungen des Scheibenwischerarms und der dadurch in der Näherungssensorik detektierte Sensorsignalverlauf sich von den Bewegungen von Gegenständen bzw. Körperteilen im Bereich vor der Bildfläche des Navigationsgerätes so signifikant unterscheiden, dass diese unterschiedlichen Bewegungen voneinander durch Auswertung des Sensorsignalverlaufs unterscheidbar sind.

Besonders einfach und kostengünstig kann die erfindungsgemäße Richtungsabhängigkeit der Detektionsfunktion an der Näherungssensorik dadurch realisiert werden, dass als Näherungssensor eine Detektionselektrode Verwendung findet, die eine richtungsabhängige Detektionsempfindlichkeit aufweist. Die Detektionselektrode mit ihrer richtungsabhängigen Detektionsempfindlichkeit ist dabei so im Navigationsgerät anzuordnen, dass die vom Scheibenwischerarm verursachten Sensorsignale sich signifikant von den Sensorsignale, die durch Bewegungen vor der Bildfläche bei Annäherung eines Gegenstands oder eines Körperteils verursacht werden, unterscheiden. Dies kann insbesondere dadurch erreicht werden, dass die Detektionsempfindlichkeit der Detektionselektrode für den Bereich oberhalb des Navigationsgerätes geringer ist als die Detektionsempfindlichkeit für den Bereich vor dem Navigationsgerät. Dadurch wird erreicht, dass die von der Bewegung des Scheibenwischerarms verursachten Sensorsignale entsprechend signifikant schwächer sind, als die von der Bewegung einer Hand oder eines Gegenstands vor der Bildfläche des Navigationsgerätes verursachten Sensorsignale.

In welcher Bauart die Detektionselektrode zum Aufbau der Näherungssensorik ausgebildet ist, ist grundsätzlich beliebig. Besonders geeignet sind kapazitiv wirkende Detektionselektroden, durch die die Änderung der Kapazität, wie sie durch die Bewegung von Gegenständen oder Körperteilen in der Umgebung der Näherungssensorik verursacht wird, detektiert werden kann. Zur Realisierung einer richtungsabhängigen Detektionsempfindlichkeit der Näherungssensorik ist es besonders vorteilhaft, wenn die Detektionselektrode eine U-förmige Gestalt aufweist und dabei so am Navigationsgerät angeordnet ist, dass sich die beiden seitlichen Schenkel der Detektionselektrode parallel zu den beiden seitlichen Rändern der Bildfläche und der untere Verbindungsteil der Detektionselektrode parallel zum Unterrand der Bildfläche erstreckt. Durch diesen einfachen U-förmigen Aufbau der Detektionselektrode wird erreicht, dass die Detektionsempfindlichkeit der Detektionselektrode im Bereich über der Oberseite des Navigationsgerätes signifikant geringer ist als die Detektionsempfindlichkeit der Detektionselektrode für den Bereich vor der Vorderseite des Navigationsgeräts. Dies beruht darauf, dass aufgrund der fehlenden Detektionselektrode am oberen seitlichen Rand des Navigationsgerätes die kapazitiven Änderungen oberhalb des Navigationsgerätes aufgrund der größeren Entfernung zu den Detektionselektroden in den seitlichen bzw. unteren Rändern des Navigationsgerätes nur erheblich schwächer empfangen werden.

Die Empfindlichkeit gegenüber Bewegungen oberhalb des Navigationsgerätes, wie sie beispielsweise von den Scheibenwischerarmen bei Anordnung des Navigationsgerätes unterhalb der Windschutzscheibe verursacht werden, kann auch dadurch weiter reduziert werden, dass die seitlichen Schenkel der Detektionselektrode gekürzt sind und mit ihren freien Enden gegenüber dem oberen Rand der Bildfläche zurückgesetzt sind. Auch durch diese Maßnahme kann der Abstand zwischen den Bewegungen der Scheibenwischerarme und den Detektionselektroden vergrößert und die von den Scheibenwischerarmen durch ihre Bewegung verursachten Sensorsignale entsprechend geschwächt werden.

Alternativ zur Verwendung einer U-förmigen Detektionselektrode kann auch eine ringförmige Detektionselektrode verwendet werden, wobei die Richtungsabhängigkeit durch Anbringung von Abschirmungselementen in bestimmten Bereichen, insbesondere am oberen Rand des Navigationsgerätes, realisiert wird.

Alternativ zur Verwendung einer sich axial im Rand des Navigationsgerätes erstreckenden Detektionselektrode kann auch eine flächig und transparent auf der Bildfläche des Navigationsgerätes angeordnete Detektionselektrode Verwendung finden. Alternativ sind auch flächige Detektionselektroden denkbar, die unterhalb, d.h. hinter einer transparenten Schicht, die die Bildfläche bildet, liegen. Bei den transparenten Detektionselektroden kann es sich beispielsweise um ein kapazitiv wirkendes Drahtnetz handeln, dessen Messdrähte entsprechend fein gewählt sind. Um die erfindungsgemäß notwendige Richtungsabhängigkeit der Detektionsempfindlichkeit zu erreichen, kann die Detektionselektrode kleiner als die eigentliche Bildfläche ausgewählt sein und wird nur in einem am unteren Rand der Bildfläche liegenden Teilbereich befestigt. Dies bedeutet mit anderen Worten, dass ein oberer Teilbereich der Bildfläche nicht von der Detektionselektrode überdeckt wird, so dass Scheibenwischerbewegungen, die bei Anordnung des Navigationsgerätes unterhalb der Windschutzscheibe oberhalb des Navigationsgerätes stattfinden, entsprechend geschwächt detektiert werden.

Alternativ zur Verwendung einer lediglich einen Teilbereich der Bildfläche überdeckenden flächigen Detektionselektrode kann auch eine Detektionselektrode eingesetzt werden, die die gesamte Bildfläche überdeckt. Zur Realisierung der richtungsabhängigen Detektionsempfindlichkeit kann bei solchen, die gesamte Bildfläche überdeckenden Detektionselektroden dahin modifiziert werden, dass nur ein am unteren Rand der Bildfläche liegender Teilbereich der Detektionselektrode bei der Signalauswertung ausgewertet wird. Wird als Detektionselektrode beispielsweise auf der Bildfläche eine leitfähige Beschichtung angebracht, so kann diese leitfähige Beschichtung mit einer Unterbrechung versehen werden, die einen oberen Teilbereich von einem unteren Teilbereich trennt. Zur Auswertung der Näherungssensorik wird dann lediglich der untere Teil der leitfähigen Beschichtung detektiert, wohingegen der obere Teil der leitfähigen Beschichtung außer Acht bleibt.

Alternativ zur Verwendung von Detektionselektroden mit richtungsabhängiger Detektionsempfindlichkeit können zur Realisierung der erfindungsgemäßen richtungsabhängigen Detektionsfunktion auch mehrere, insbesondere zwei, Detektionselektroden im Navigationsgerät als Näherungssensorik Verwendung finden. Um die richtungsabhängige Detektionsfunktion zu realisieren ist es dabei notwendig, dass die verschiedenen Detektionselektroden so im Navigationsgerät angeordnet sind, dass sie bei Annäherung eines Scheibenwischerarms bzw. bei Annäherung einer Hand oder eines Gegenstands aus dem Bereich vor dem Display entsprechend signifikant unterschiedliche Signalverläufe generieren. Um nun die Annäherung eines Scheibenwischerarms aus dem Bereich über der Windschutzscheibe von der Annäherung eines Gegenstands oder eines Körperteils aus dem Bereich vor der Bildfläche unterscheiden zu können, werden bei dieser Variante die Signaldifferenzen zwischen den Sensorsignalen der verschiedenen Detektionselektroden ermittelt, wobei aufgrund der signifikant unterschiedlichen Sensorsignalverläufe die Unterscheidung der Scheibenwischerarmbewegung von der Annäherung eines Gegenstands bzw. eines Körperteils aus dem Bereich vor dem Display ermöglicht wird.

Signifikant unterschiedliche Sensorsignalverläufe bezüglich der Annäherung eines Scheibenwischerarms bzw. der Annäherung eines Gegenstands oder Körperteils aus dem Bereich vor der Bildfläche ergeben sich, wenn eine erste Detektionselektrode an der Gehäusevorderseite und eine zweite Detektionselektrode an der Gehäuserückseite angeordnet ist. Denn die Gehäuserückseite ist bei Anordnung des Navigationsgerätes unterhalb der Windschutzscheibe der Scheibenwischerarmbewegung erheblich näher als die Gehäusevorderseite. Die Gehäusevorderseite dagegen ist den Bewegungen von Körperteilen oder Gegenständen im Bereich vor der Bildfläche erheblich näher als die Gehäuserückseite. Somit ergeben sich entsprechend signifikante Sensorsignalverlaufsdifferenzen, die es leicht ermöglichen, die Bewegung von Scheibenwischerarmen oberhalb der Windschutzscheibe von Bewegungen eines Körperteils oder eines Gegenstands vor der Bildfläche zu unterscheiden.

Besonders vorteilhaft ist die Anordnung der auf der Rückseite des Gehäuses vorgesehenen zweiten Detektionselektrode im Bereich des oberen Rands des Gehäuses. Dies insbesondere dann, wenn die an der Vorderseite des Gehäuses vorgesehene erste Detektionselektrode eine U-förmige Gestalt aufweist und den oberen Rand des Gehäuses gerade ausspart.

Zur konstruktiven Umsetzung der Detektionselektroden ist es besonders vorteilhaft, wenn an der Gehäuseaußenseite des Navigationsgerätes ein entsprechendes Bauteil angeordnet ist, das die Detektionselektrode bildet. Dies kann beispielsweise durch Verwendung eines metallischen oder oberflächlich metallisierten Zierelements realisiert werden.

Alternativ zur Verwendung einer Näherungssensorik mit richtungsabhängiger Detektionsfunktion kann das der Erfindung zugrunde liegende Problem auch durch eine besondere Verfahrensweise bei der Auswertung der Sensorsignale der Näherungssensorik gelöst werden. Denn die Scheibenwischerarmbewegung ist durch eine gleichmäßige Wiederholfrequenz charakterisiert, wobei die durch die Näherungssensorik aufgetretenen Sensorsignalspitzen jeweils nur sehr kurz auftreten, da der Scheibenwischerarm das Navigationsgerät nur sehr kurzzeitig oberhalb der Windschutzscheibe überstreift. Deshalb wird als weitere Möglichkeit zur Lösung des Problems der Störung einer Näherungssensorik in einem Navigationsgerät durch die Bewegung von Scheibenwischerarmen ein erfindungsgemäßes Verfahren vorgeschlagen, bei dem der Sensorsignalverlauf der Näherungssensorik hinsichtlich der Signaldauer der Sensorsignale und/oder der Frequenz der Sensorsignale ausgewertet wird. Erfindungsgemäß ist es dabei vorgesehen, dass Sensorsignale, die eine vorgegebene Mindestsignaldauer bei einem entsprechenden Signalniveau unterschreiten und/oder Sensorsignale, die sich mit einer regelmäßigen Frequenz wiederholen, ausgeblendet werden. Auf diese Weise können Sensorsignale, die durch die Bewegung der Scheibenwischerarme verursacht werden, aussortiert werden, um Störungen bei der Prozessverarbeitung im Navigationsgerät auszuschließen. Eine Kombination der Merkmale des erfindungsgemäßen Verfahrens mit den Merkmalen des erfindungsgemäßen Navigationsgeräts ist ebenfalls denkbar, um die von der Bewegung der Scheibenwischerarme verursachten Störungen bei der Auswertung von Signalen der Näherungssensorik möglichst sicher ausschließen zu können

Verschiedene Aspekte der Erfindung sind in den Zeichnungen schematisiert dargestellt und werden nachfolgend beispielhaft erläutert.

Es zeigen:
- Fig. 1: die Anordnung eines erfindungsgemäßen Navigationsgerätes mit Näherungssensorik an der Unterseite einer Windschutzscheibe in einem Fahrzeug;
- Fig. 2: das Navigationsgerät gemäß Fig. 1 in Ansicht von vorne;
- Fig. 3: eine alternative Ausführungsform eines erfindungsgemäßen Navigationsgerätes mit richtungsabhängiger Näherungssensorik in Ansicht von vorne;
- Fig. 4: eine dritte Ausführungsform eines Navigationsgerätes mit richtungsabhängiger Näherungssensorik in Ansicht von vorne;
- Fig. 5: das Navigationsgerät gemäß Fig. 4 in seitlicher Ansicht;
- Fig. 6: das Navigationsgerät gemäß Fig. 4 in Ansicht von hinten.

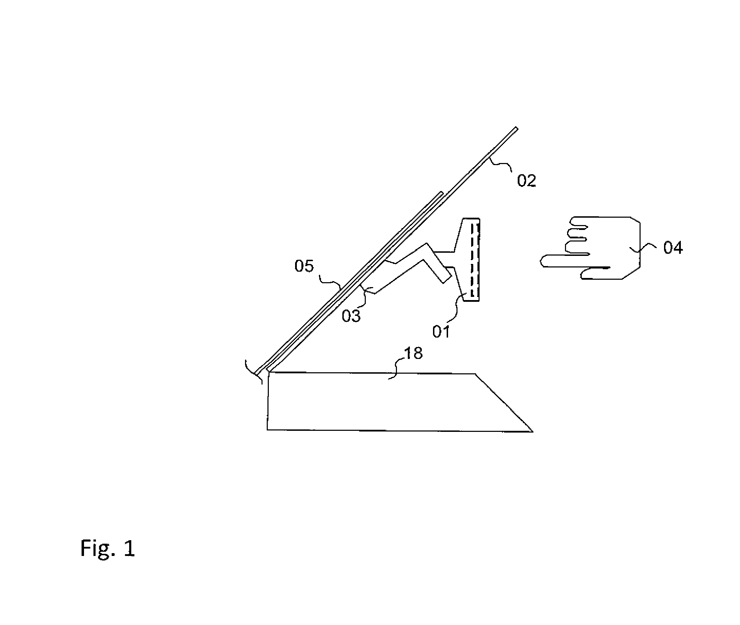

Fig. 1 zeigt in schematisierter Ansicht die Anordnung eines Navigationsgerätes 01 bei Anordnung an einer Windschutzscheibe 02 oberhalb einer Armaturentafel 18 in einem lediglich schematisch angedeuteten Fahrzeug. Zur Befestigung des Navigationsgerätes 01 an der Windschutzscheibe 02 dient ein Haltearm 03, der beispielsweise mittels eines Saugnapfes an der Innenseite der Windschutzscheibe befestigbar ist.

Das Navigationsgerät 01 ist mit einer Näherungssensorik ausgestattet, die es erlaubt, Eingabebefehle berührungslos zu erkennen. Dazu können die Bewegungen einer Hand 04 im Bereich vor dem Navigationsgerät von der Näherungssensorik detektiert und von einer entsprechenden Steuerungssoftware als Bedienbefehle interpretiert werden. Aufgrund der Anordnung des Navigationsgerätes direkt unterhalb der Windschutzscheibe 02 ergibt sich das Problem, dass beim Betrieb der Scheibenwischerarme 05 fälschlicherweise ein Bedienbefehl durch die Näherungssensorik detektiert wird. Denn der Abstand zwischen dem Navigationsgerät 01 und der darin verbauten Näherungssensorik und dem Wischerarm 05 ist relativ gering, so dass zur Vermeidung von Störungen eine Unterscheidung von Bewegungen der Hand 04 und Bewegungen des Wischerarms 05 unbedingt erforderlich ist.

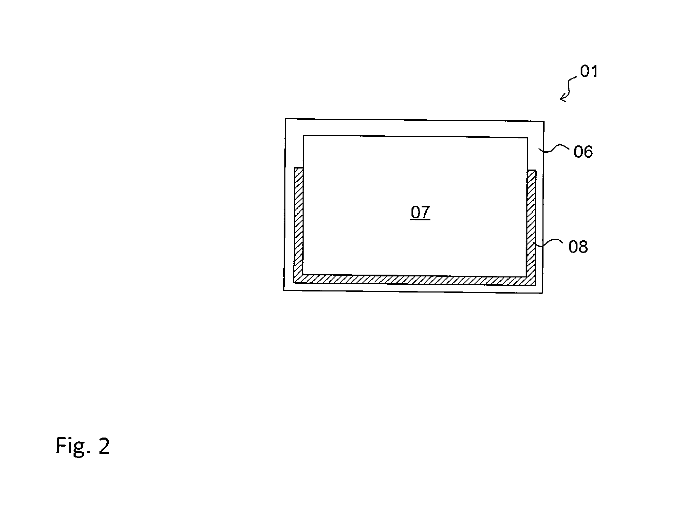

Fig. 2 zeigt das Navigationsgerät 01 in schematisierter Darstellung in Ansicht von vorne. In den Rand des Gehäuses 06, das die Bildfläche 07 der Anzeigeeinrichtung umrahmt, ist eine kapazitive Detektionselektrode 08 eingebaut, die die Bildfläche 07 auf drei Seiten umrahmt. Die Detektionselektrode 08 wird dabei selbstverständlich vom Material des Gehäuses 06 überfangen, um Beschädigungen der Detektionselektrode 08 auszuschließen. Die Lage der Detektionselektrode 08 ist deshalb in Fig. 2 strichliniert angedeutet. Aufgrund der U-förmigen Gestalt der Detektionselektrode 08, bei der der obere Rand des Gehäuses 06 ausgespart ist, weist die Detektionselektrode 08 bei der Detektion von Bewegungen in der Umgebung des Navigationsgerätes 01 eine richtungsabhängige Detektionsempfindlichkeit auf. Es werden nämlich Bewegungen, die vor der Bildfläche 07 stattfinden, mit erheblich stärkeren Sensorsignalen detektiert, als Bewegungen die oberhalb des oberen Rands des Gehäuses 06 stattfinden. Auf diese Weise können Bewegungen einer Hand 04 vor der Bildfläche 07 in einfacher Weise von Bewegungen der Wischerarme 05 oberhalb des Navigationsgerätes unterschieden werden, da die von den verschiedenen Bewegungen verursachten Sensorsignale ein völlig unterschiedliches Sensorsignalniveau aufweisen.

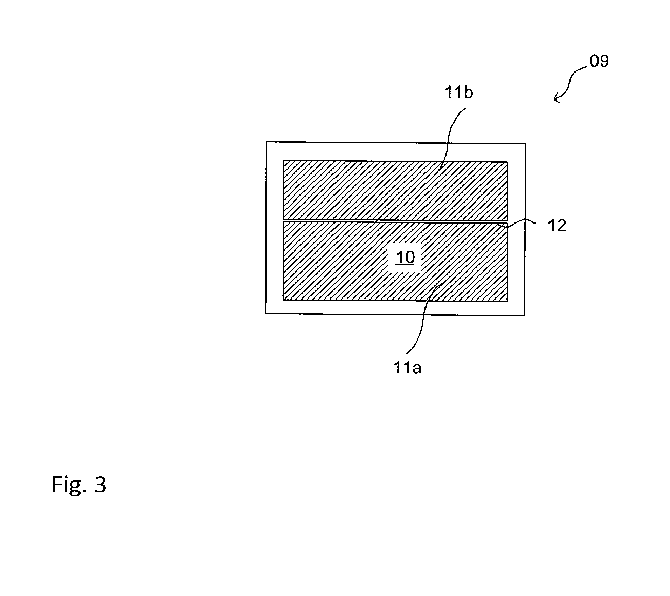

In Fig. 3 ist eine alternative Bauform 09 eines Navigationsgeräts schematisiert dargestellt, bei der auf der Bildfläche 10 eine transparente, flächige Detektionselektrode 11, beispielsweise ein kapazitiv wirkendes Drahtgitternetz, angebracht ist. Zur Realisierung der richtungsabhängigen Detektionsempfindlichkeit wird an der flächigen Detektionselektrode 11 eine Unterbrechung 12 angebracht und bei Betrieb der Detektionselektrode 11 nur der untere Teilbereich 11 a ausgewertet, wohingegen die Sensorsignale des oberen Teilbereichs 11b der Detektionselektrode bei der Auswertung außer Acht gelassen werden. Dies führt wiederum dazu, dass Bewegungen von Händen oder Gegenständen vor der Bildfläche 10 mit einem erheblich stärkeren Sensorsignalverlauf einhergehen, als Bewegungen oberhalb des Navigationsgerätes, wie sie insbesondere von den Scheibewischerarmen verursacht werden.

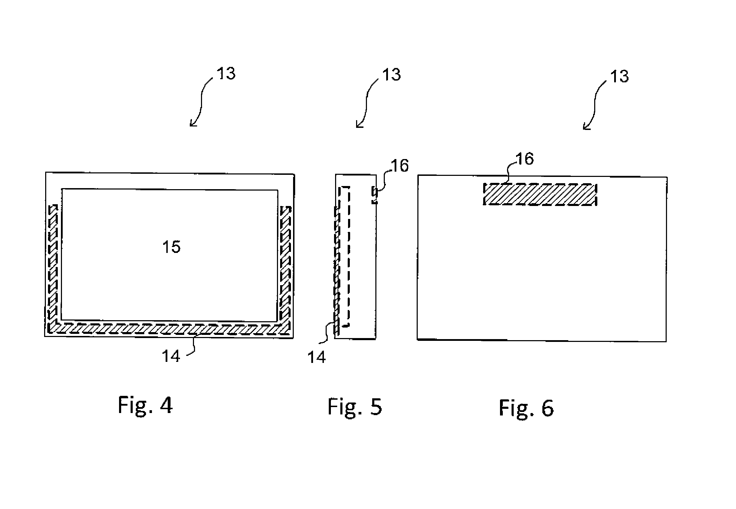

Fig. 4, Fig. 5 und Fig. 6 zeigen eine weitere Variante eines erfindungsgemäßen Navigationsgerätes 13 zur Lösung des Problems der Unterscheidung von Wischerarmbewegungen. Beim Navigationsgerät 13 ist auf der Gerätevorderseite, wie beim Navigationsgerät 01, eine U-förmige Detektionselektrode 14 vorgesehen, deren freie Enden, wie bei der Detektionselektrode 08, gegenüber den Rändern der Bildfläche 15 zurückspringen. Zusätzlich zu der Detektionselektrode 14 ist am Navigationsgerät 13 auf dessen Rückseite eine zweite Detektionselektrode 16 vorgesehen, die sich ihrerseits lediglich am oberen Rand des Gehäuses 17 erstreckt. Zur Unterscheidung der Bewegung von Scheibenwischerarmen gegenüber den Bewegungen des Bedieners wird die Sensorsignaldifferenz zwischen den beiden Detektionselektroden 14 und 16 ausgewertet. Die Auswerteeinheit bewertet dabei den Sensorsignalverlauf der beiden Detektionselektroden 14 und 16, der die Empfindlichkeit der einzelnen Elektroden egalisiert. Im Ergebnis kann die Auswerteeinheit dann dadurch ein Annäherungsergebnis jeweils nur dann signalisieren, wenn die detektierte Annäherung auf der Vorderseite des Navigationsgerätes 13 stattgefunden hat, wohingegen Annäherungen von oben, wie sie von den Scheibenwischerarmen verursacht werden, ausgeblendet werden.

## Patentansprüche

1. Portables elektronisches Navigationsgerät (01, 09, 13), mit einem Gehäuse (06, 17) zur Anordnung unterhalb der Windschutzscheibe (02) eines Fahrzeugs, mit einer Steuerungseinrichtung zur Durchführung eines Navigationsprozesses, mit einer Anzeigeeinrichtung, mittels derer Informationen auf einer Bildfläche (07, 10, 15) darstellbar sind, und mit einer Näherungssensorik (08, 11, 14, 16), wobei zur berührungslosen Eingabe von Bedienbefehlen mittels der Näherungssensorik (08, 11, 14, 16) eine Annäherung eines Gegenstands und/oder eines Körperteils (04) an das Navigationsgerät (01, 09, 13) detektiert werden kann,
**dadurch gekennzeichnet,**
**dass** die Näherungssensorik (08, 11, 14, 16) eine richtungsabhängige Detektionsfunktion aufweist, wobei die richtungsabhängige Detektionsfunktion der Näherungssensorik (08, 11, 14, 16) die Annäherung eines Gegenstands und/oder eines Körperteils (04) aus dem Bereich vor der Bildfläche (07, 10, 15) von der Annäherung eines Scheibenwischerarms (05) aus dem Bereich über der Windschutzscheibe (02) unterscheiden kann.

2. Navigationsgerät nach Anspruch 1,
**dadurch gekennzeichnet,**
**dass** die Näherungssensorik zumindest eine Detektionselektrode (08, 11, 14) umfasst, die eine richtungsabhängige Detektionsempfindlichkeit aufweist.

3. Navigationsgerät nach Anspruch 2,
**dadurch gekennzeichnet,**
**dass** die Detektionsempfindlichkeit der Detektionselektrode (08, 11, 14) für den Bereich über der Oberseite des Navigationsgeräts geringer ist als die Detektionsempfindlichkeit der Detektionselektrode (08, 11, 14) für den Bereich vor der Vorderseite des Navigationsgeräts (01, 09, 13).

4. Navigationsgerät nach einem der Ansprüche 1 bis 3,
**dadurch gekennzeichnet,**
**dass** die Detektionselektrode (08, 11, 14, 16) kapazitiv Änderungen in der Umgebung des Navigationsgeräts (01, 09, 13) detektieren kann.

5. Navigationsgerät nach einem der Ansprüche 1 bis 4,
**dadurch gekennzeichnet,**
**dass** die Detektionselektrode (08, 14) U-förmig ausgestaltet ist, wobei sich die seitlichen Schenkel der Detektionselektrode (08, 14) parallel zu den beiden seitlichen Rändern der Bildfläche (07, 15) und der untere Verbindungsteil der Detektionselektrode (08, 14) parallel zum unteren Rand der Bildfläche (07, 15) erstreckt.

6. Navigationsgerät nach Anspruch 5,
**dadurch gekennzeichnet,**
**dass** die beiden seitlichen Schenkel der Detektionselektrode (08, 14) kürzer sind als die zugeordneten seitlichen Rändern der Bildfläche (07, 15), wobei die freien Enden der seitlichen Schenkel der Detektionselektrode (08, 14) gegenüber dem oberen Rand der Bildfläche (07, 15) zurückgesetzt sind.

7. Navigationsgerät nach einem der Ansprüche 1 bis 4,
**dadurch gekennzeichnet,**
**dass** die Detektionselektrode flächig und transparent ausgestaltet ist und die Bildfläche teilweise überdeckt oder unterhalb der transparenten Schicht der Bildfläche liegt, wobei die Detektionselektrode nur in einem am unteren Rand der Bildfläche liegenden Teilbereich angeordnet ist.

8. Navigationsgerät nach einem der Ansprüche 1 bis 4,
**dadurch gekennzeichnet,**
**dass** die Detektionselektrode (11) flächig und transparent ausgestaltet ist oder unterhalb der transparenten Schicht der Bildfläche liegt und wobei die Bildfläche (10) und die Detektionselektrode (11) im Wesentlichen flächengleich sind, wobei nur ein am unteren Rand der Bildfläche 10 liegender Teilbereich (11a) der Detektionselektrode (11) bei der Signalauswertung ausgewertet wird.

9. Navigationsgerät nach einem der Ansprüche 1 bis 8,
**dadurch gekennzeichnet,**
**dass** die Näherungssensorik mehrere Detektionselektroden (14, 16) umfasst, wobei durch Auswertung der Signaldifferenz der einzelnen Detektionselektroden (14, 16) die Annäherung eines Gegenstands und/oder eines Körperteils (04) aus dem Bereich vor der Bildfläche (15) von der Annäherung eines Scheibenwischerarms (05) aus dem Bereich über der Windschutzscheibe (02) unterschieden werden kann.

10. Navigationsgerät nach Anspruch 9,
**dadurch gekennzeichnet,**
**dass** eine erste Detektionselektrode (14) an der Gehäusevorderseite des Navigationsgeräts (13) und eine zweite Detektionselektrode (16) an der Gehäuserückseite des Navigationsgeräts (13) angeordnet ist.

11. Navigationsgerät nach Anspruch 9 oder 10,
**dadurch gekennzeichnet,**
**dass** die zweite Detektionselektrode (16) im Bereich des oberen Rands des Gehäuses des Navigationsgeräts (13) angeordnet ist.

12. Navigationsgerät nach einem der Ansprüche 1 bis 11,
**dadurch gekennzeichnet,**
**dass** zumindest eine Detektionselektrode (08, 11, 14, 16) von einem an der Gehäuseaußenseite angeordnetem Bauteil, insbesondere einem metallischen oder oberflächlich metallisierten Zierelement, gebildet wird.

13. Verfahren zum Betrieb eines portablen elektronischen Navigationsgerätes, mit einem Gehäuse zur Anordnung an der Windschutzscheibe eines Fahrzeugs, mit einer Steuerungseinrichtung eines Navigationsprozesses, mit einer Anzeigeeinrichtung, mittels derer Informationen auf einer Bildfläche darstellbar sind, und mit einer Näherungssensorik, wobei zur berührungslosen Eingabe von Bedienbefehlen mittels der Näherungssensorik eine Annäherung eines Gegenstands und/oder eines Körperteils an das Navigationsgerät detektiert werden kann,
**dadurch gekennzeichnet,**
**dass** der Sensorsignalverlauf der Näherungssensorik ausgewertet wird, wobei
a) Sensorsignale, die eine vorgegebene Mindestsignaldauer unterschreiten und/oder
b) Sensorsignale, die sich mit einer regelmäßigen Frequenz wiederholen,
ausgeblendet werden.
